# EUROPEAN PATENT APPLICATION

(11) **EP 4 219 899 A1**
(43) Date of publication of application: **02.08.2023**
(21) Application number: 23153331.6
(22) Date of filing: 25.01.2023
(51) Int. Cl.: F01D 5/04, F01D 5/14

(54) **TURBOCHARGER**

(30) Priority: 31.01.2022 US 202263304787 P
(71) Applicant: BRP-Rotax GmbH & Co. KG, 4623 Gunskirchen (AT)
(72) Inventor: WURM, Johannes, 4702 Wallern an der Trattnach (AT); STIEBINGER, Christian, 4611 Buchkirchen (AT); WOLFSGRUBER, Markus, 4814 Neukirchen bei Altmuenster (AT)
(74) Representative: Murgitroyd & Company

(57) **Abstract**

A turbocharger for an internal combustion engine has: a turbine comprising a turbine wheel, the turbine wheel having a plurality of turbine blades, the turbine wheel rotating about a turbine axis; and a compressor having a compressor wheel, the compressor wheel being operatively connected to and driven by the turbine wheel, the compressor wheel rotating about a compressor axis, the compressor wheel comprising a plurality of compressor blades, the compressor wheel defining a plurality of passages, each passage of the plurality of passages having a front end opened in a front of the compressor wheel and a rear end opened in a rear of the compressor wheel.

## Description

### FIELD OF TECHNOLOGY

The present technology relates to turbochargers.

### BACKGROUND

Internal combustion engines are sometimes provided with a turbocharger that is configured to increase the engine's efficiency by feeding additional compressed air into the engine's cylinder(s). The turbocharger has a compressor wheel connected to a turbine wheel via a shaft. The turbine wheel is driven by exhaust gas from the vehicle engine. The turbine wheel drives the shaft, which drives the compressor wheel.

During operation, air flows generally axially from an air inlet toward a front of the compressor wheel. As it turns, the compressor wheel compresses the air and discharges the compressed air radially. This however causes air pressure on a rear of the compressor wheel to increase. The difference in pressure between the front and rear of the compressor wheel generates an axial force on the compressor wheel away from the turbine wheel (i.e., toward the air inlet). As such, the bearings supporting the shaft need to be able to compensate for this force, which typically means larger and/or more expensive bearings than if this axial force was not present. This force also generates friction in the bearings, thus affecting the efficiency of the turbocharger.

The bearings supporting the shaft are typically housed in a bearing housing located between the compressor wheel and the turbine wheel. During operation, the pressure inside the bearing housing is less than the pressure behind the compressor wheel. As a result of this pressure difference, some of the high-pressure air behind the compressor wheel may flow into the bearing housing. This is referred to as "blow-by". This blow-by can cause issues with the lubrication of the bearings and with the corresponding oil circuit.

There is therefore a desire for a turbocharger in which the axial force caused by the air pressure behind the compressor wheel is at least reduced.

### SUMMARY

It is an object of the present technology to ameliorate at least some of the inconveniences present in the prior art.

According to one aspect of the present technology, there is provided a turbocharger for an internal combustion engine. The turbocharger has: a turbine having a turbine wheel, the turbine wheel comprising a plurality of turbine blades, the turbine wheel rotating about a turbine axis; and a compressor having a compressor wheel, the compressor wheel being operatively connected to and driven by the turbine wheel, the compressor wheel rotating about a compressor axis, the compressor wheel comprising a plurality of compressor blades, the compressor wheel defining a plurality of passages, each passage of the plurality of passages having a front end opened in a front of the compressor wheel and a rear end opened in a rear of the compressor wheel.

In some embodiments, for each passage of the plurality of passages, the front end is disposed at a first radius from the compressor axis and the rear end is disposed at a second radius from the compressor axis, the first radius being larger than the second radius.

In some embodiments, for each passage of the plurality of passages, a centerline of the passage and the compressor axis define a plane.

In some embodiments, for each passage of the plurality of passages, the front end is circumferentially offset of the rear end.

In some embodiments, for each passage of the plurality of passages, the front end is forward of the rear end with reference to a direction of rotation of the compressor wheel.

In some embodiments, for each passage of the plurality of passages, an angle between the passage and the compressor axis is less than or equal to 45 degrees.

In some embodiments, the angle is less than or equal to 20 degrees.

In some embodiments, the front ends of the plurality of passages are disposed in a circle and the rear ends of the plurality of passages disposed in a circle.

In some embodiments, the compressor wheel also has a hub. The plurality of compressor blades is connected to the hub. The hub has a front frustoconical portion, a rear radial portion, and a curved transition portion between the front frustoconical portion and the rear radial portion. The front ends of the plurality of passages are disposed in the curved transition portion.

In some embodiments, the front ends of the plurality of passages are disposed in inter-blade portions of the compressor wheel disposed between compressor blades of the plurality of compressor blades.

In some embodiments, in a projection of the of the compressor wheel onto a plane normal to the compressor axis, at least some compressor blades of the plurality of compressor blades at least partially overlap the front ends of the plurality of passages.

In some embodiments, the plurality of compressor blades has: first compressor blades having a first length; and second compressor blades having a second length. The first length is greater than the second length.

In some embodiments, a number of compressor blades equals a number of passages.

In some embodiments, the turbine wheel and the compressor wheel are coaxial.

In some embodiments, the turbocharger also has a shaft. The turbine wheel and the compressor wheel are mounted to the shaft.

In some embodiments, the turbine also has a turbine housing. The turbine wheel is disposed inside the turbine housing. The compressor also has a compressor housing. The compressor wheel is disposed inside the compressor housing.

In some embodiments, a bearing housing is disposed between the turbine housing and the compressor housing; a shaft extends through the bearing housing, the turbine wheel and the compressor wheel being mounted to the shaft; and at least one bearing disposed in the bearing housing and rotationally supporting the shaft inside the bearing housing.

In some embodiments, the shaft extends through the compressor wheel.

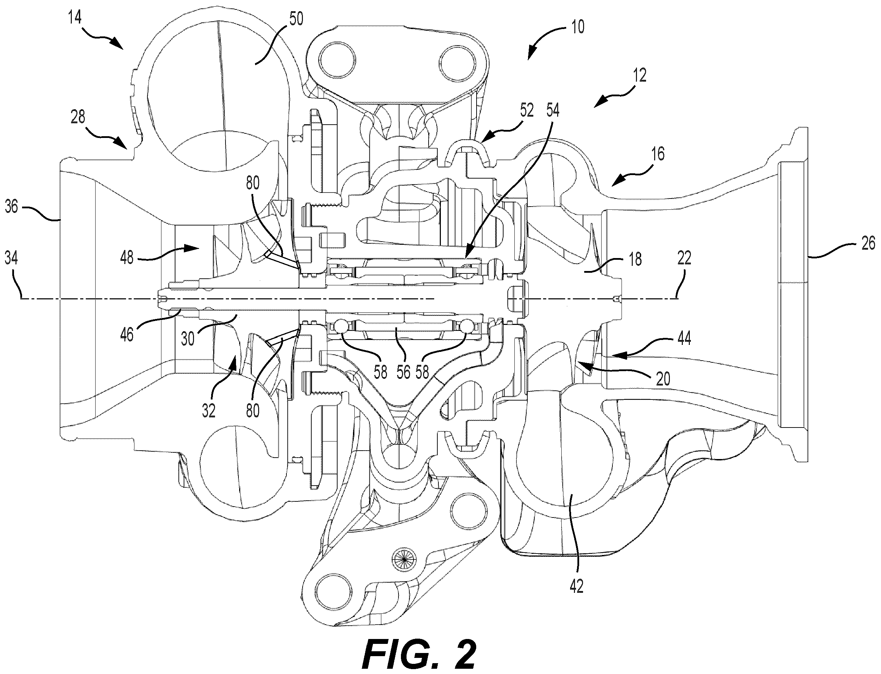

For purposes of the present invention, a front of a compressor wheel of the turbocharger should be understood as corresponding to a side of the compressor wheel facing incoming air during operation of the turbocharger (i.e., the front of the compressor wheel faces an air inlet of a compressor housing in the embodiment illustrated in Fig. 2). This nomenclature is not dependent on an orientation of the turbocharger in space. For example, should the turbocharger be oriented such that the compressor wheel rotates about a vertical axis and such that air to be compressed flows down toward the compressor wheel, the side of the compressor wheel that is facing upward would still be referred to as the front of the compressor wheel.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a left side elevation view of a turbocharger;
Figure 2 is a cross-section of the turbocharger of Fig. 1;
Figure 3 is a perspective view of a compressor wheel of the turbocharger of Fig. 1;
Figure 4 is a left side elevation view of the compressor wheel of Fig. 3;
Figure 5 is a front elevation view of the compressor wheel of Fig. 3;
Figure 6 is a rear elevation view of the compressor wheel of Fig. 3;
Figure 7 is a cross-section of the compressor wheel of Fig. 3 taken through line 7-7 of Fig. 5;
Figure 8 is a perspective view of an alternative embodiment of the compressor wheel of Fig. 3;
Figure 9 is a side elevation view of the compressor wheel of Fig. 8;
Figure 10 is a front elevation view of the compressor wheel of Fig. 8;
Figure 11 is a rear elevation view of the compressor wheel of Fig. 8;
Figure 12 is a top view of a cross-section of the compressor wheel of Fig. 8 taken through a plane defined by a centerline of a top passage of the compressor wheel, the plane being perpendicular to an axis of rotation of the compressor wheel; and
Figure 13 is a left side elevation view of the cross-section of the compressor wheel of Fig. 12.

It should be noted that the Figures may not be drawn to scale unless otherwise noted.

### DETAILED DESCRIPTION

The present technology will be described below with respect to a turbocharger for a four-stroke, multiple-cylinder internal combustion engine intended for powering a vehicle. It is contemplated that at least some aspects of the present technology could vary depending on the specific technical details of the turbocharger and/or the engine for which the turbocharger is designed.

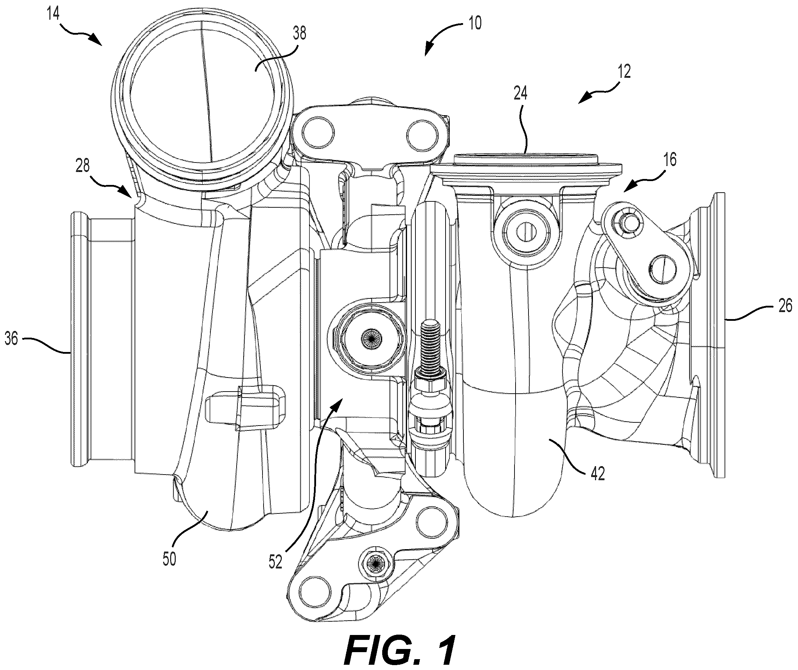

With reference to Figures 1 and 2, a turbocharger 10 configured for a four-stroke, internal combustion engine (not shown) will be described. The turbocharger 10 has a turbine 12 and a compressor 14. The turbine 12 is propelled by exhaust gases produced by an internal combustion engine (not shown) to which the turbocharger 10 is connected and the compressor 14 is powered by the turbine 12 to supply compressed air to the internal combustion engine.

The turbine 12 includes a turbine housing 16 and a turbine wheel 18 disposed inside the turbine housing 16. The turbine wheel 18 has a plurality of turbine blades 20 and rotates about a turbine axis 22. The turbine housing 16 defines an exhaust gas inlet 24 in fluid communication with an outlet of an exhaust manifold of the internal combustion engine. The turbine housing 16 also defines an exhaust gas outlet 26 in fluid communication with an exhaust system (not shown).

The compressor 14 includes a compressor housing 28 and a compressor wheel 30 disposed inside the compressor housing 28. The compressor wheel 30 has a plurality of compressor blades 32 and rotates about a compressor axis 34. The compressor housing 28 defines an air inlet 36 in fluid communication with an air intake system (not shown) of the internal combustion engine. The compressor housing 28 also defines an air outlet 38 in fluid communication with air inlet ports of the internal combustion engine.

The turbine wheel 18 is mounted to an end of a shaft 40 for rotation therewith. When the turbocharger 10 is in use, the turbine wheel 18 is driven by the exhaust gases flowing into the exhaust gas inlet 24 and through a volute 42 defined by the turbine housing 16. In use, the exhaust gases that enter a chamber 44 in the turbine housing 16 cause the turbine wheel 18, and thus the shaft 40 to which the turbine wheel 18 is mounted, to rotate about the turbine axis 22. Exhaust gases then flow out of the chamber 44 via the exhaust gas outlet 26.

The compressor wheel 30 is mounted to an opposite end portion of the shaft 40 for rotation about the compressor axis 34. As can be seen in Fig. 2, the shaft 40 extends through the compressor wheel 30. The compressor wheel 30 is axially fixed to the shaft 40 by a nut 46. As in the present embodiment the turbine wheel 18 and the compressor wheel 30 are mounted to and rotate with the shaft 40, the turbine axis 22 and the compressor axis 34 are coaxial. Therefore, the turbine wheel 18 and the compressor wheel 30 are coaxial. It is contemplated that in alternative embodiments, the turbine wheel 18 and the compressor wheel 30 could be mounted to different shafts that are drivingly connected to each other via gears for example. In such embodiments, the turbine wheel 18 and the compressor wheel 30 could not be coaxial.

When the turbocharger 10 is in use, the shaft 40 is driven by the turbine wheel 18 and drives the compressor wheel 30. In use, air that enters a chamber 48 in the compressor housing 28 via the air inlet 36 is compressed by the compressor wheel 30 that rotates about the compressor axis 34. The compressed air then flows from the chamber 48 to the air outlet 38 via a volute 50 defined by the compressor housing 28.

A bearing housing 52 is disposed axially between the turbine housing 16 and the compressor housing 28. As can be seen in Fig. 2, the bearing housing 52 defines a bearing chamber 54. The shaft 40 extends through the bearing housing 52 via the bearing chamber 54. A bearing cartridge 56 defining two bearings 58 is disposed in the bearing chamber 54. The bearings 58 rotationally support the shaft 40 inside the bearing housing 52.

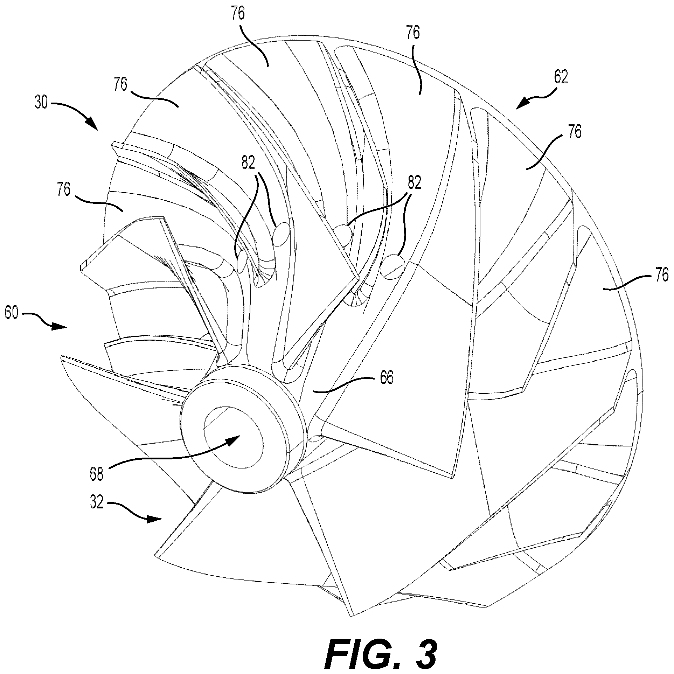

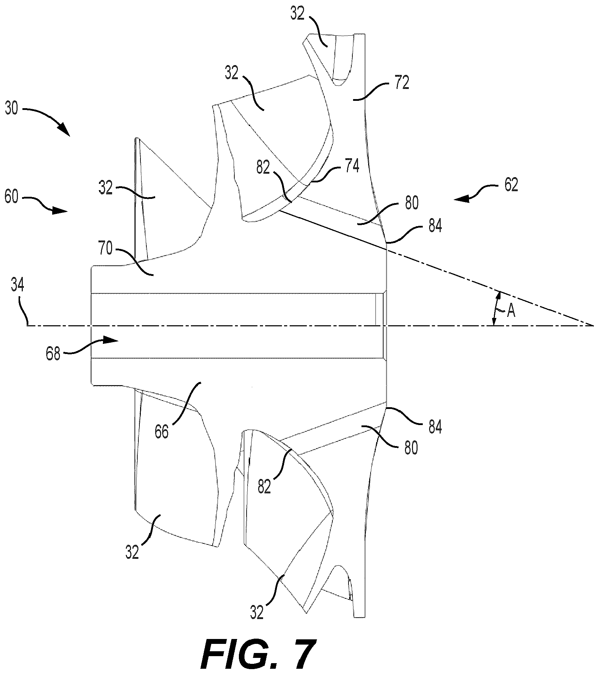

Turning now to Figures 3 to 7, the compressor wheel 30 will be described in more detail. The compressor wheel 30 has a front 60 facing the air inlet 36 and a rear 62 facing the turbine wheel 18. As described above, the compressor wheel 30 has a plurality of compressor blades 32. The compressor wheel 30 also has a hub 66 to which the plurality of compressor blades 32 are connected. The hub 66 defines a central bore 68 through which the shaft 40 extends. With reference to Fig. 7, the hub 66 has a front frustoconical portion 70, a rear radial portion 72 and a curved transition portion 74 between the front frustoconical portion 70 and the rear radial portion 72.

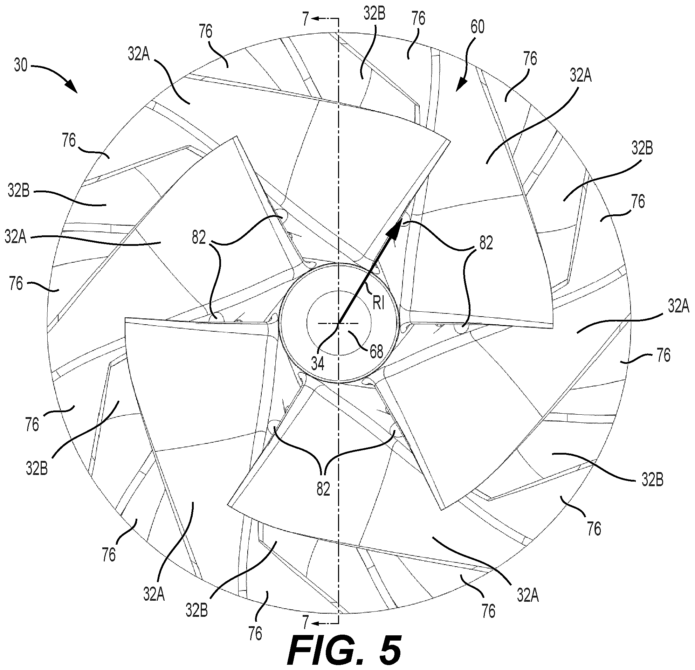

The compressor blades 32 are distributed evenly about the compressor axis 34. In the illustrated embodiment, the compressor wheel 30 has twelve compressor blades 32. It is contemplated that the compressor wheel 30 could include more or less than twelve compressor blades 32. More specifically, with reference to Fig. 5, the twelve compressor blades 32 include six compressor blades 32A and six compressor blades 32B. As can be seen a length of the compressor blades 32A is greater than a length of the compressor blades 32B. The compressor blades 32A, 32B are distributed in an alternating arrangement about the compressor axis 34. The exact number of compressor blades 32 in any given embodiment depends on various technical requirements of the turbocharger 10, including but not limited to: air mass flow, turbocharger rotation speed, compressor boost pressure, and turbocharger weight. Similarly, the specific form, such as the length, shape, or thickness, of each compressor blade 32 could vary from that shown in the illustrated embodiment. The spaces between the compressor blades 32 along the surface of the hub 66 are referred to herein as inter-blade portions 76, some of which are labeled in the figures.

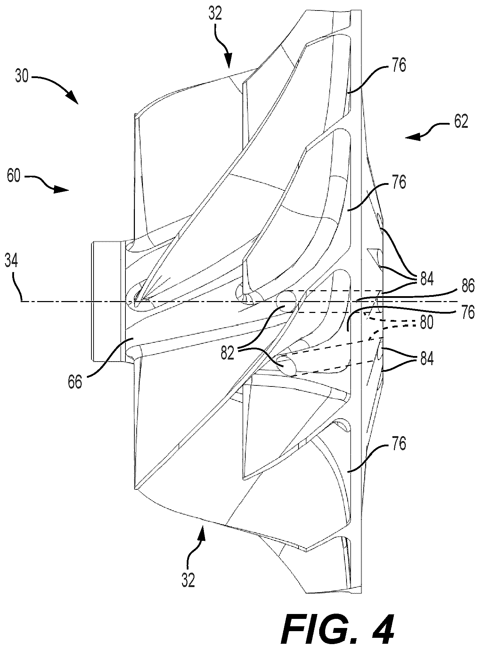

The compressor wheel 30 defines a plurality of passages 80 that extend through the compressor wheel 30 from front to back. Two of the passages 80 are illustrated by dotted lines in Fig. 4, and two of the passages 80 are shown in Fig. 7. The passages 80 are distributed evenly about the compressor axis 34. It has been found that compared to a turbocharger that is identical to the turbocharger 10, except that the compressor wheel has no passages 80, during operation of the turbocharger 10, the difference in air pressure between the front 60 and rear 62 of the compressor wheel 30 having the passages 80 as described below is almost 50 percent less than for the compressor wheel without the passages 80, with a negligible drop in efficiency (i.e., about 1 percent drop at peak efficiency operating parameters). This advantageously reduces the axial force acting on the shaft 40 and the bearings 58. Also, the lower air pressure on the rear 62 of the compressor wheel 30 means that there is a lower likelihood of blow-by into the bearing housing 52.

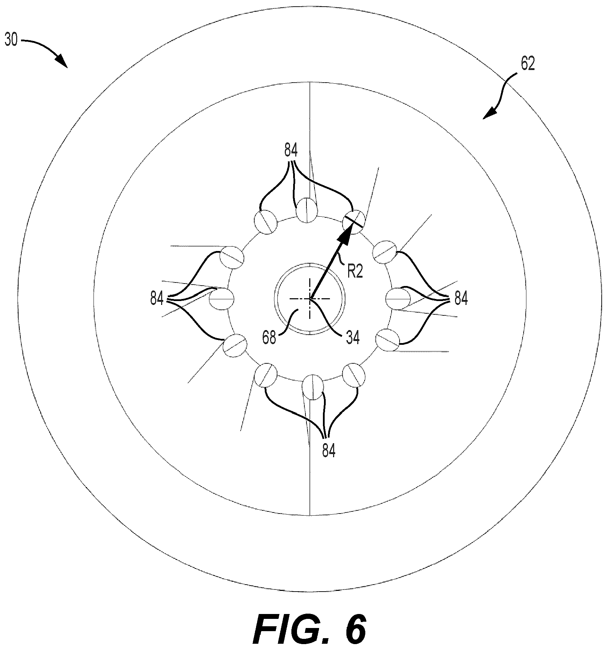

In the present embodiment, the number of passages 80 is equal to the number of compressor blades 32 (i.e., twelve). It is contemplated that the number of passages 80 could be a factor of the number of compressor blades 32 (i.e., 3, 4, 6) or a multiple of the number of compressor blades 32 (i.e., 24, 36). More specifically, each passage has a front end 82 opened in the front 60 of the compressor wheel 30 and a rear end 84 opened in the rear 62 of the compressor wheel 30. The passages 80 extend straight between their respective front and rear ends 82, 84. The front ends 82 of the passages 80 are disposed in a circle and the rear ends 84 of the passages 80 are also disposed in a circle. The centers of the front ends 82 are disposed at a radius R1 (Fig. 5) from the compressor axis 34. The centers of the rear ends 84 are disposed at a radius R2 (Fig. 6) from the compressor axis 34. As can be seen the radius R1 is larger than the radius R2, such that the passages 80 extend away from the compressor axis 34 as they extend from the rear ends 84 to their front ends 82. An angle A (Fig. 7) between each passage 80 and the compressor axis 34 is less than or equal to 45 degrees. In the present embodiment, the angle A is 20 degrees, but it is contemplated that it could be less than 20 degrees. It is also contemplated that a diameter of the passages 80 could be bigger or smaller than illustrated. As can be seen for one of the passages 80 in Fig. 4, for each of the passages 80, a centerline 86 of the passage 80 and the compressor axis 34 define a plane. In other words, for each passage 80, the front end 82 and the rear end 84 are circumferentially aligned.

As best seen in Figs. 3, 4 and 7, the front ends 82 of the passages 80 are disposed in the inter-blade portions 76 in the curved transition portion 74 of the hub 66. It is contemplated that in alternative embodiments, the front ends 82 of the passages could be disposed elsewhere in the hub 66. In a projection of the compressor wheel 30 onto a plane normal to the compressor axis 34, as illustrated in Fig. 5, at least some compressor blades 32 at least partially overlap the front ends 82 of the passages 80. More specifically, with reference to Fig. 5, six of the front ends 82 are completely overlapped by the compressor blades 32, and as such cannot be seen, and six of the front ends 82 are partially overlapped by the compressor blades 32.

In use, the axial force on the compressor wheel 30 caused by the above described pressure differential is in a direction opposite to the axial force on the turbine wheel 18 caused by a pressure difference between the front and rear of the turbine wheel 18. As such, in one embodiment, the number of passages 80, the size and location of the front ends 82, and the size and location of the rear ends 84 are selected such that in operation the difference between the axial force on the compressor wheel 30 and the axial force on the turbine wheel 18 is minimized.

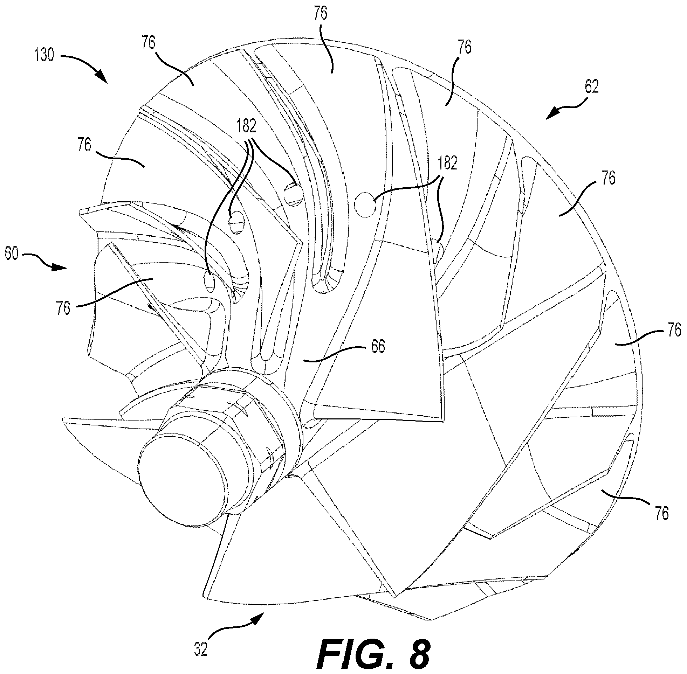

Turning now to Figs. 8 to 13, a compressor wheel 130, which is an alternative embodiment of the compressor wheel 30, will be described in more detail. For simplicity, components of the compressor wheel 130 that are the same as or similar to components of the compressor wheel 30 have been labelled with the same reference numerals and will not be described again in detail.

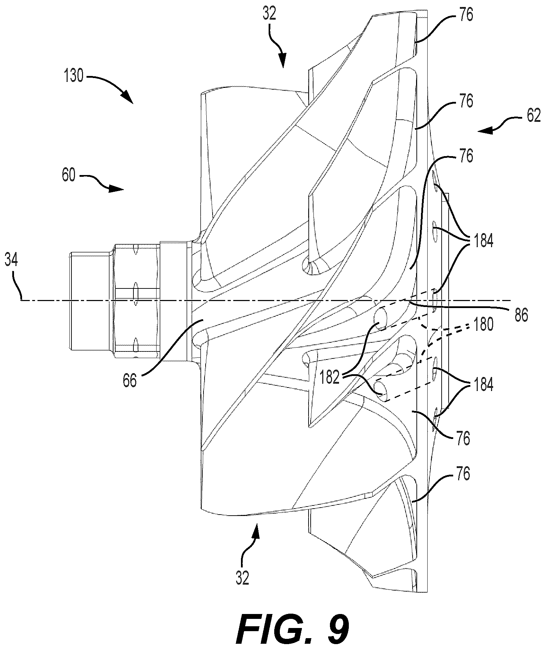

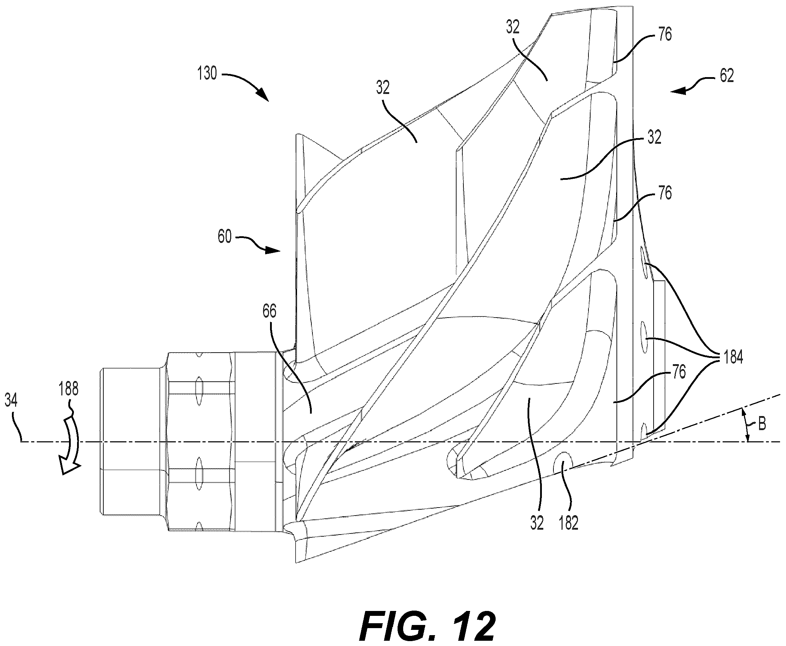

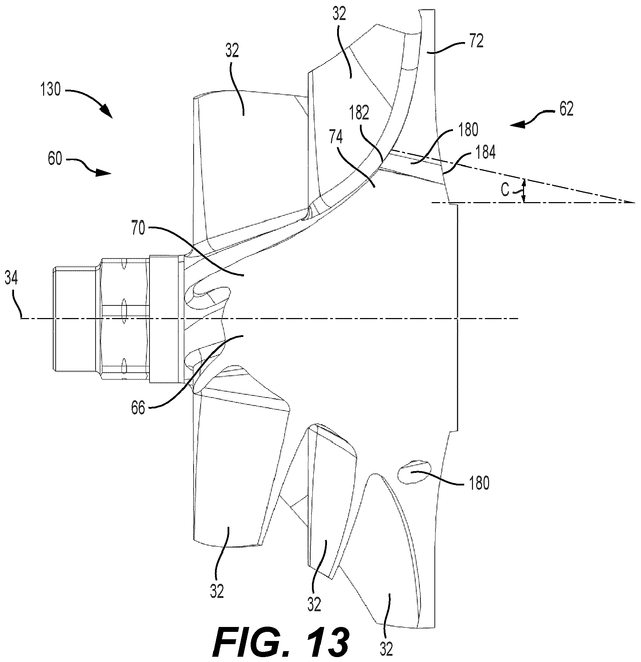

The main difference between the compressor wheel 130 and the compressor wheel 30 is that the compressor wheel 130 defines passages 180 instead of the passages 80 described above. The passages 180 extend through the compressor wheel 130 from front to back. Two of the passages 180 are illustrated by dotted lines in Fig. 9, and passages 180 are shown at least in part in Figs. 12 and 13. The passages 180 are distributed evenly about the compressor axis 34.

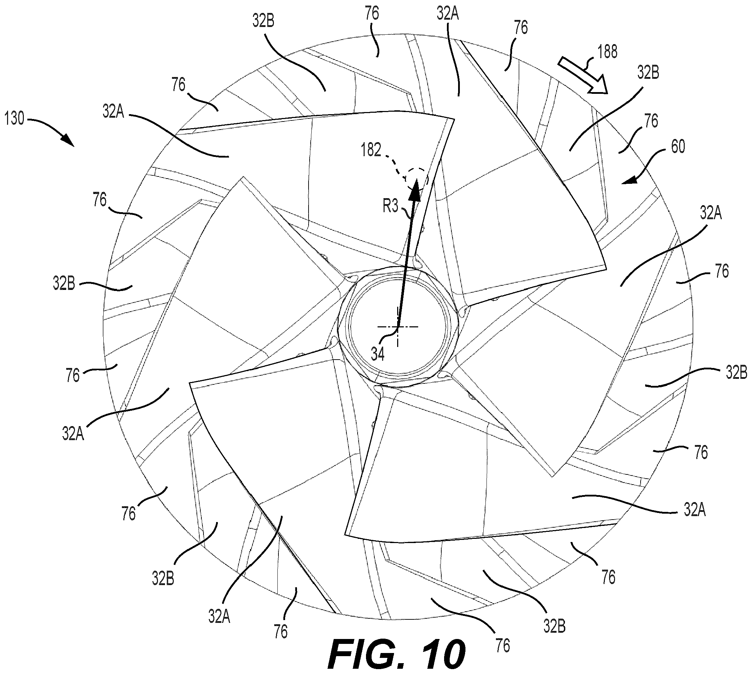

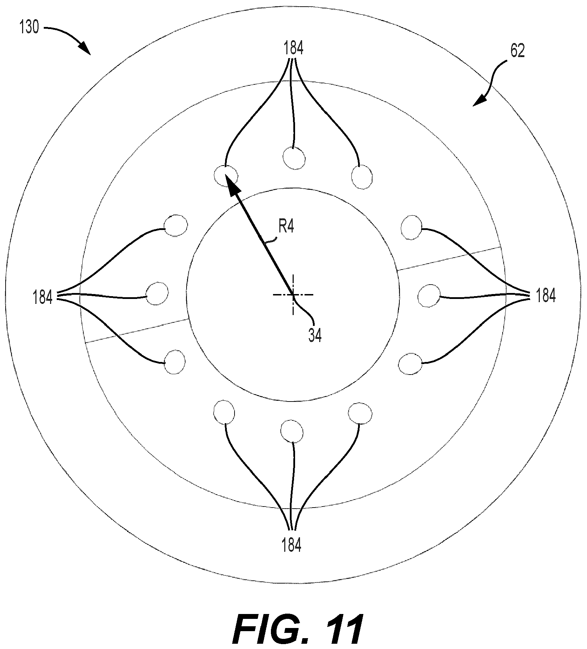

In the present embodiment, the number of passages 180 is equal to the number of compressor blades 32 (i.e., twelve). It is contemplated that the number of passages 180 could be a factor of the number of compressor blades 32 (i.e., 3, 4, 6) or a multiple of the number of compressor blades 32 (i.e., 24, 36). More specifically, each passage has a front end 182 opened in the front 60 of the compressor wheel 130 and a rear end 184 opened in the rear 62 of the compressor wheel 130. The passages 180 extend straight between their respective front and rear ends 182, 184. The front ends 182 of the passages 180 are disposed in a circle and the rear ends 184 of the passages 180 are also disposed in a circle. The centers of the front ends 82 are disposed at a radius R3 (Fig. 10) from the compressor axis 34. The centers of the rear ends 184 are disposed at a radius R4 (Fig. 11) from the compressor axis 34. As can be seen the radius R3 is larger than the radius R4, such that the passages 180 extend away from the compressor axis 34 as they extend from the rear ends 184 to their front ends 182. Also, the radius R3 is larger than the radius R1 in the compressor wheel 30 and the radius R4 is larger than the radius R2 in the compressor wheel 30. For each passage 180, the front end 182 is circumferentially offset from the rear end 184 as best seen in Fig. 12. More specifically, with reference to a direction of rotation of the compressor wheel 130 when in use, as illustrated by arrow 188 in Figs. 10 and 12, the front end 182 of each passage 180 is forward of its corresponding rear end 184. As viewed in a plane normal to a radius passing through a center of the rear end 184 of a passage 180, such as in Fig. 12, the front end 182 is offset from the rear end 184 by an angle B with respect to the compressor axis 34. The angle B between each passage 180 and the compressor axis 134 is less than or equal to 45 degrees. In the present embodiment, the angle B is 15 degrees, but it is contemplated that it could be less than 15 degrees. An angle C (Fig. 13) between each passage 180 and the compressor axis 34 taken in a plane defined by radius passing through a center of the rear end 184 of a passage 180 and the compressor axis 34 is less than or equal to 45 degrees. In the present embodiment, the angle C is 15 degrees, but it is contemplated that it could be less than 15 degrees. It is also contemplated that a diameter of the passages 180 could be bigger or smaller than illustrated.

As best seen in Figs. 8, 9, 12 and 13, the front ends 182 of the passages 180 are disposed in the inter-blade portions 76 in the curved transition portion 74 of the hub 66. It is contemplated that in alternative embodiments, the front ends 182 of the passages could be disposed elsewhere in the hub 66. In a projection of the compressor wheel 130 onto a plane normal to the compressor axis 34, as illustrated in Fig. 10, in the present embodiment, the compressor blades 32 completely overlap the front ends 182 of the passages 180.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A turbocharger for an internal combustion engine, comprising:
a turbine comprising a turbine wheel, the turbine wheel comprising a plurality of turbine blades, the turbine wheel rotating about a turbine axis; and
a compressor comprising a compressor wheel, the compressor wheel being operatively connected to and driven by the turbine wheel, the compressor wheel rotating about a compressor axis, the compressor wheel comprising a plurality of compressor blades, the compressor wheel defining a plurality of passages, each passage of the plurality of passages having a front end opened in a front of the compressor wheel and a rear end opened in a rear of the compressor wheel.

2. The turbocharger of claim 1, wherein for each passage of the plurality of passages, the front end is disposed at a first radius from the compressor axis and the rear end is disposed at a second radius from the compressor axis, the first radius being larger than the second radius.

3. The turbocharger of claim 2, wherein for each passage of the plurality of passages, a centerline of the passage and the compressor axis define a plane.

4. The turbocharger of claim 2, wherein for each passage of the plurality of passages, the front end is circumferentially offset of the rear end.

5. The turbocharger of claim 4, wherein for each passage of the plurality of passages, the front end is forward of the rear end with reference to a direction of rotation of the compressor wheel.

6. The turbocharger of claim 2, wherein for each passage of the plurality of passages, an angle between the passage and the compressor axis is less than or equal to 45 degrees.

7. The turbocharger of any one of claims 1 to 6, wherein the front ends of the plurality of passages are disposed in a circle and the rear ends of the plurality of passages disposed in a circle.

8. The turbocharger of any one of claims 1 to 7, wherein:
the compressor wheel further comprises a hub;
the plurality of compressor blades being connected to the hub;
the hub having a front frustoconical portion, a rear radial portion, and a curved transition portion between the front frustoconical portion and the rear radial portion; and
the front ends of the plurality of passages are disposed in the curved transition portion.

9. The turbocharger of any one of claims 1 to 8, wherein the front ends of the plurality of passages are disposed in inter-blade portions of the compressor wheel disposed between compressor blades of the plurality of compressor blades.

10. The turbocharger of any one of claims 1 to 9, wherein, in a projection of the of the compressor wheel onto a plane normal to the compressor axis, at least some compressor blades of the plurality of compressor blades at least partially overlap the front ends of the plurality of passages.

11. The turbocharger of any one of claims 1 to 10, wherein a number of compressor blades equals a number of passages.

12. The turbocharger of any one of claims 1 to 11, further comprising a shaft; and
wherein the turbine wheel and the compressor wheel are mounted to the shaft.

13. The turbocharger of any one of claims 1 to 11, wherein:
the turbine further comprises a turbine housing, the turbine wheel being disposed inside the turbine housing; and
the compressor further comprises a compressor housing, the compressor wheel being disposed inside the compressor housing.

14. The turbocharger of claim 13, further comprising:
a bearing housing disposed between the turbine housing and the compressor housing;
a shaft extending through the bearing housing, the turbine wheel and the compressor wheel being mounted to the shaft; and
at least one bearing disposed in the bearing housing and rotationally supporting the shaft inside the bearing housing.

15. The turbocharger of claim 14, wherein the shaft extends through the compressor wheel.
